# DEMANDE DE BREVET EUROPEEN

(11) **EP 0 622 609 A2**
(43) Date de publication de la demande: **02.11.1994**
(21) Numéro de dépôt: 94200991.1
(22) Date de dépôt: 12.04.1994
(51) Int. Cl.: G01B 11/02, G01C 15/00

(54) **Instrument à rayons laser visibles pour la mesure de longueurs sans contact physique**

(30) Priorité: 20.04.1993 IT VI930061
(71) Demandeur: MICRO ITALIANA S.p.A., I-36071 Arzignano (Vicenza) (IT)
(72) Inventeur: Doriguzzi, Bozzo Mario, Ing., Milano (IT)
(74) Mandataire: Bettello, Luigi, Dott. Ing.

(57) **Abrégé**

L'instrument comprend un dispositif extensible (1) qui comporte à son extrémité supérieure (2) un émetteur de rayons laser visibles, orientés perpendiculairement à l'axe du dispositif, si bien qu'il est possible de mesurer à distance la hauteur au-dessus du sol d'un objet (3) sans qu'il soit nécessaire d'avoir un contact physique avec celui-ci.

## Description

La présente invention a pour objet l'instrument extensible à rayons laser visibles pour la mesure de longueurs sans contact physique qui est défini à la revendication 1.

Cet instrument est en fait remarquable en ce qu'il comprend un dispositif extensible à l'une au moins des extrémités duquel est prévu un émetteur propre à émettre, perpendiculairement à l'axe du dispositif extensible, un rayon laser visible qui permet d'effectuer des mesures verticales si le dispositif précité est orienté verticalement, des mesures horizontales s'il est orienté horizontalement.

Dans le cas le plus fréquent de mesures verticales, le dispositif extensible prend appui sur le plan de référence à partir duquel on désire relever la hauteur à laquelle est placé l'objet considéré.

Par suite de son extensibilité, le dispositif permet de positionner le rayon laser à la côte désirée ; au point où le rayon rencontre un corps solide, ce rayon définit une tache colorée clairement visible, si bien qu'on individualise de la sorte avec exactitude la ligne ou le point recherchés.

La lecture de la mesure s'effectue sur le dispositif extensible, ce dernier étant réalisé de manière télescopique ou de toute autre manière ; il est avantageusement doté d'un système de mesure à ruban, à règles graduées, à capteur digital électronique ou de tout autre type connu.

Comme on l'exposera plus loin, une mesure correcte exige que le dispositif extensible soit orienté de manière parfaitement verticale et c'est pour cette raison qu'il est équipé d'un système de nivellement de précision, de type en soi connu. En vue de faciliter l'opération, il est avantageux de fixer le dispositif extensible à un trépied ou autre support, par exemple à l'aide d'une pince susceptible d'être réglée dans différentes directions.

De plus, le rayon laser de visée doit être orienté de manière rigoureusement horizontale et pour cete raison il doit sortir du dispositif extensible suivant une direction perpendiculaire à l'axe de celui-ci.

Cette condition peut être obtenue structurellement lors du montage du dispositif, ou bien elle constitue une caractéristique intrinsèque due à l'agencement du dispositif lui-même, comme on le comprendra mieux ci-après.

Suivant une première forme de réalisation, l'émetteur est rigidement fixé à l'extrémité supérieure du dispositif, cet émetteur étant disposé et réglé de façon à ce que le rayon laser soit émis suivant une direction perpendiculaire à l'axe du dispositif. En étant tenu en position vericale, c'est le dispositif extensible qui détermine ainsi l'horizontalité du rayon.

Dans une deuxième forme de réalisation, l'extrémité supérieure du dispositif extensible comporte une tête oscillante à auto-nivellement par gravité, qui est équipée de l'émetteur de rayon laser disposé de manière telle qu'à la position de repos, le rayon laser soit émis de manière rigoureusement horizontale.

Conformément à une troisième forme de réalisation, l'émetteur porté par le dispositif extensible engendre un rayon laser orienté parallèlement à l'axe dudit dispositif, en étant solidaire de ce dernier ou lié rigidement à la partie fixe de celui-ci, lequel émetteur incorpore un système de nivellement de précision de façon à ce que le rayon émis se trouve toujours dans un plan parfaitement vertical. A l'extrémité supérieure du dispositif est en outre prévu un prisme de rabattement positionné en saillie de manière à intercepter le rayon vertical et à la dévier très exactement à 90°, de sorte que le rayon laser renvoyé soit finalement orienté parfaitement à l'horizontale.

Les remarques qui précèdent pour la mesure de hauteurs sont bien entendu valables pour la mesure, sans contact, de distances horizontales. Aucune modification ne doit être apportée à ce qui a été ci-dessus exposé, aussi bien dans le cas d'un émetteur fixe monté à l'extrémité du dispositif extensible de manière à émettre un rayon laser perpendiculairement à l'axe de ce dispositif, que dans le cas d'un émetteur fixé parallèlement à l'axe du dispositif pour émettre des rayons laser déviés à 90° à l'aide d'un prisme ou d'un pentaprisme placé à l'extrémité dudit dispositif.

Dans le cas d'une tête oscillante, l'émetteur doit au contraire être disposé de manière à ce qu'à la position de repos, le rayon laser soit émis verticalement.

Le dessin annexé, donné à titre d'exemple, permettra de mieux comprendre l'invention, les caractéristiques qu'elle présente et les avantages qu'elle est susceptible de procurer :
Fig. 1 est une vue schématique d'un instrument suivant l'invention équipé d'un seul émetteur de rayons laser, en vue de la mesure de la hauteur au-dessus du sol d'un point pris en considération.
Fig. 2 est une vue analogue à celle de fig. 1, l'instrument ayant été supposé légèrement incliné.
Fig. 3 est une coupe de détail montrant la tête oscillante à auto-nivellement qui porte l'émetteur, ce dernier étant supposé muni d'un système capacitif pour l'amortissement des oscillations pendulaires.
Fig. 4 illustre la projection du rayon laser à la verticale, ledit rayon étant intercepté par un prisme ou par un pentaprisme prévu à l'extrémité supérieure du dispositif pour dévier à l'équerre ledit rayon en vue d'individualiser le point à observer.
Fig. 5 représente l'instrument suivant fig. 4 équipé d'un second pentaprisme prévu à la sortie du rayon laser de l'émetteur, le dispositif extensible étant lié par une pince réglable à un trépied-support.

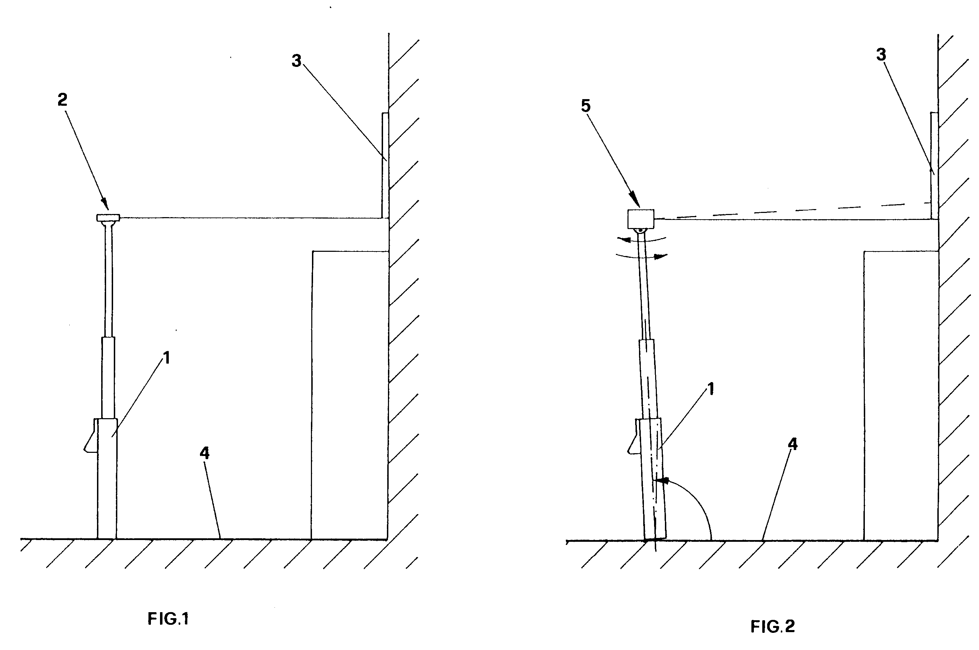

L'instrument de mesure représenté en fig. 1 comprend un dispositif réalisé à l'aide de tubes à coulissement télescopique ou d'une autre manière propre à le rendre extensible en longueur. A son extrémité supérieure, ce dispositif 1 est rigidement muni d'une tête 2 équipée d'un émetteur de rayons laser, ces rayons étant projetés perpendiculairement à l'axe du dispositif 1 de façon à ce qu'un rayon orthogonal puisse viser le bord d'un objet vertical tel que 3 en vue de mesurer la hauteur de celui-ci par rapport au sol 4 contre lequel ledit dispositif 1 prend appui.

La mesure désirée est obtenue moyennant une simple lecture sur le dispositif extensible 1, sans la nécessité d'un contact physique entre l'extrémité de ce dispositif et l'objet à mesurer.

On ne peut obtenir un relevé correct qu'à la condition que le dispositif extensible 1 soit maintenu de manière rigoureusement verticale, si bien que ce dispositif est muni d'un système approprié de mise à niveau réalisé de toute manière connue, par exemple à l'aide de niveaux à bulle ou de repères.

Par ailleurs, afin de faciliter l'opération, il peut être prévu l'emploi d'un chevalet-trépied ou autre support similaire, pourvu d'une pince réglable apte à assurer le positionnement efficace et adéquat du dispositif extensible.

Le dispositif extensible 1 qui a été illustré en fig. 2 porte à son extrémité supérieure une tête 5 de type oscillant à auto-nivellement par gravité, cette tête étant avantageusement amortie dans ses oscillations. La tête 5 est équipée de l'émetteur de rayons laser qui est disposé de manière telle qu'à la position de repos de ladite tête 5, les rayons soient émis à l'horizonale.

Cet agencement permet une mesure correcte de la hauteur comprise entre le sol et le bord inférieur de l'objet 3, même si le dispositif 1 n'est pas maintenu de manière parfairement verticale. En effet, de faibles défauts dans la verticalité du dispositif n'engendrent pas des erreurs appréciables entre la longueur à mesurer et la valeur lue sur ledit dispositif.

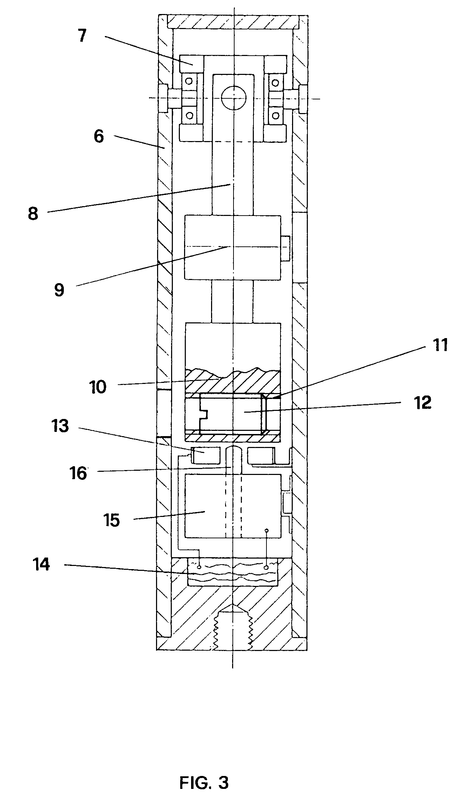

On a représenté de manière détaillée en fig. 3 une forme particulière de réalisation de la tête oscillante 5 à auto-nivellement.

Cette tête comprend un carter 6 à l'intérieur duquel est monté un mécanisme à articulations croisées 7 ou système équivalent, qui supporte une tige 8 sur laquelle est perpendiculairement monté l'émetteur de rayons laser 9 ; un contrepoids 10 assure de manière permanente la verticalité parfaite de la tige 8 et, par conséquent, l'horizontalité précise du rayon laser issu de l'émetteur 9.

De plus, le contrepoids 10 peut être percé d'un taraudage transversal 11 renfermant une vis 12 qui permet, moyennant déplacement de sa masse, de compenser les petites irrégularités éventuelles de l'équipage oscillant et d'obtenir ainsi l'horizontalité exacte du rayon laser.

Au moment de la mise en position du dispositif apparaissent évidemment des oscillations qui affectent la position du contrepoids 10 ; ces oscillations peuvent être amorties, par exemple au moyen d'un système de freinage de type capacitif comprenant un capteur capacitif à anneau 13 relié, à travers un circuit électronique 14 convenablement alimenté, à un électro-aimant 15 dont le noyau est solidaire d'une petite tige 16, laquelle est propre à freiner par contact le contrepoids 10 et l'ensemble de l'équipage oscillant.

Le circuit électronique 14 est conçu de façon à ce que l'électro-aimant 15 soit excité lors de chaque variation de ses paramètres électriques, une telle variation engendrant la modification de la distance comprise entre le capteur 13 et le contrepoids 10 oscillant. L'électro-aimant 15 pousse alors la tige 16 du noyau jusqu'à heurter et à bloquer le contrepoids 10.

A ce moment, il n'existe plus aucun mouvement ni aucune variation de la distance séparant le contrepoids 10 et le capteur 13, si bien que l'excitation de l'électro-aimant 15 cesse et que la tige 16 s'abaisse en libérant donc le contrepoids précité.

Si ce dernier vient à se déplacer à nouveau, un autre cycle opératoire de l'électro-aimant 15 intervient très rapidement en provoquant l'actionnement de la tige 16, ces interventions rapides cessant complètement lorsque le contrepoids 10 affecte une position stable par suite de la gravité ; la tête oscillante assure alors sa position perpendiculaire définitive.

Le système de freinage et d'amortissement peut bien entendu être d'un autre type que celui ci-dessus décrit, en ayant par exemple recours à un signal optique qui, dévié par l'oscillation du contrepoids, détermine des variations de courant dans l'électro-aimant de freinage, ou bien à un système électromagnétique piloté par les variations de champ magnétique créées par un aimant permanent oscillant avec le contrepoids.

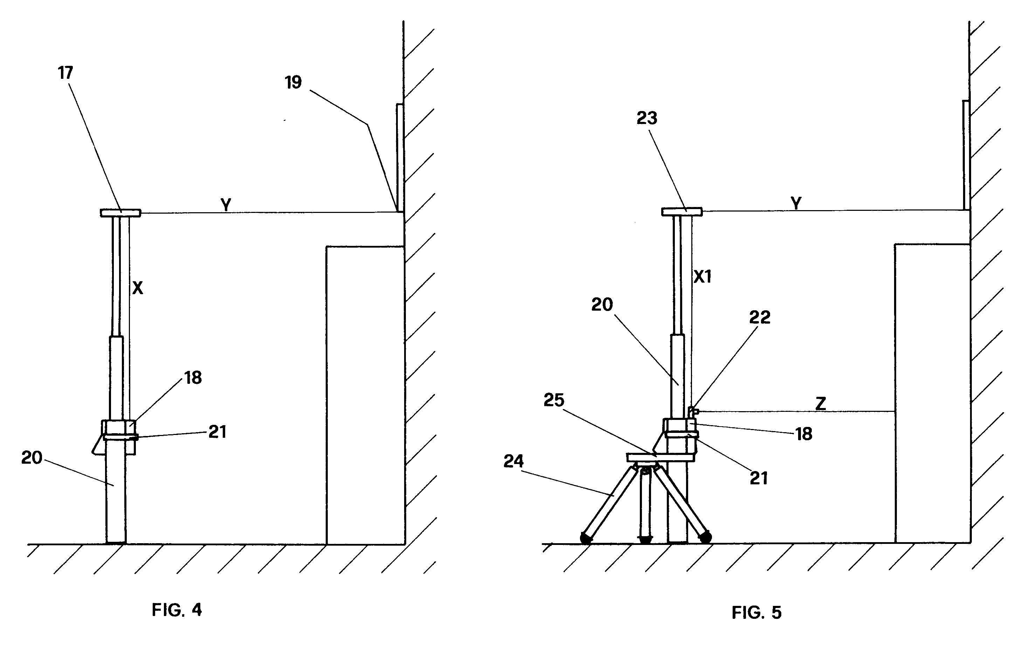

Le dispositif extensible qui a été illustré en fig. 4 est pourvu, au niveau de son extrémité mobile, d'un prisme 17 prévu en saillie de manière à intercepter et à dévier à 90° le rayon laser vertical X provenant d'un émetteur 18 convenablement placé latéralement à proximité du dispositif lui-même ; dans ces conditions, en maintenant de dispositif en position verticale, on obtient que le rayon dévié Y soit projeté à l'horizontale, ce qui permet de viser un point inaccessible 19 et d'effectuer de la sorte une mesure sans contact moyennant lecture sur le dispositif extensible.

Il va de soi qu'un mesurage correct exige que le dispositif extensible s'étende parallèlement au rayon laser vertical X.

Dans l'exemple de réalisation illustré en fig. 4, l'émetteur de rayons laser 18 est solidement fixé au dispositif extensible 20, parallèlement à celui-ci, à l'aide d'un collier 21 équipé d'un système de nivellement propre à permettre le positionnement vertical exact du rayon laser X issu dudit émetteur. A l'extrémité mobile du dispositif extensible est monté un prisme optique 17 disposé et orienté de façon à ce que le rayon X soit exactement dévié de 90°, en conséquence à l'horizontale.

Afin que le rayon dévié Y soit stable et ne soit pas affecté par les oscillations du prisme 17 monté à l'extrémité supérieure mobile du dispositif extensible, et afin que la direction horizontale du rayon Y ne se ressente pas elle-même des erreurs éventuelles de parallélisme entre le rayon vertical X et l'axe du dispositif 20, le prisme 17 peut être remplacé par un pentaprisme optique propre, à la façon connue, à toujours dévier de 90° le rayon incident, indépendamment du positionnement relatif du pentaprisme par rapport à ce rayon incident.

En fig. 5, le dispositif extensible 20 opère de la même manière qu'en fig. 4 avec l'aide d'un autre pentaprisme 22 directement prévu sur l'émetteur 18 à la sortie du rayon laser X. Ce pentaprisme 22 génère deux rayons laser, à savoir le rayon horizontal Z qui sert pour une visée fixe de référence et le rayon X1 qui, orienté de manière parfaitement verticale, est intercepté par le pentaprisme 23, lequel le dévie pour former un rayon Y orienté de manière parfaitement horizontale pour sa fonction de visée.

En vue de faciliter l'utilisation du dispositif extensible 20, il est préférable d'avoir recours à un trépied ou autre support approprié 24 auquel ledit dispositif est lié, par exemple à l'aide d'une pince 25 susceptible d'être réglée en tous sens.

En pareil cas, il est possible de disposer l'émetteur 18 séparément du dispositif 20, cet émetteur étant soutenu par une pince réglable autonome, étant observé qu'il est indispensable que l'axe du dispositif 20 soit toujours parallèle à l'axe du rayon laser vertical.

Pour pouvoir individualiser, avec le rayon dévié par le pentaprisme, un plan horizontal de référence à une hauteur connue lue sur le dispositif, le pentaprisme est monté sur un support susceptible d'être orienté à la main ou à l'aide d'un moteur.

## Revendications

1. Instrument à rayons laser visibles pour la mesure de longueurs sans contact physique, comprenant un dispositif extensible (1, 20) de type télescopique ou autre, muni d'un système de mesure d'un genre quelconque, caractérisé en ce qu'à l'une au moins des extrémités du dispositif (1, 20) est montée une tête (2, 5) dotée d'un émetteur de rayons laser visibles, lesquels rayons, orientés perpendiculairement à l'axe du dispositif et convenablement projetés sur les extrémités de la longueur à mesurer, permettent de relever à distance la mesure de ladite longueur sans la nécessité d'un contact physique entre les extrémité du dispositif et celles du segment dont on désire mesurer la longueur.

2. Instrument suivant la revendication 1, caractérisé en ce que la tête (5) qui porte l'émetteur de rayons laser et qui est montée à l'une au moins des extrémités du dispositif (1), est montée oscillante avec auto-nivellement par gravité et, préférablement, avec amortissement, afin de permettre, à la position de repos, de maintenir constamment le rayon laser à l'horizontale dans le cas de mesures verticales, ou constamment à la verticale dans le cas de mesures horizontales, et ce même si le dispositif extensible (1) n'est pas rigoureusement orienté à la position verticale ou horizontale.

3. Instrument suivant la revendication 2, caractérisé en ce que la tête oscillante (5) qui porte l'émetteur de rayons laser comprend un carter (6) à l'intérieur duquel est prévu un mécanisme à articulations croisées (7) qui supporte une tige (8) sur laquelle est monté l'émetteur (9), tandis qu'un contrepoids (10) assure la verticalité parfaite et permanente de la tige précitée (8) et, en conséquence, une horizontalité parfaite pour des mesures verticales, ou une verticalité parfaite pour des mesures horizontales, du rayon laser émis par l'émetteur (9), la mise au point plus précise étant obtenue à l'aide d'une masse mobile montée de manière réglable à l'intérieur du contrepoids.

4. Instrument suivant l'une quelconque des revendications 2 et 3, caractérisé en ce que la tête oscillante (5) est équipée d'un mécanisme pour le freinage des oscillations, lequel mécanisme, de type capacitif, électromagnétique ou optique, comprend un capteur (13) relié par un circuit électronique (14) à un électro-aimant (15) dont le noyau comporte une tige mobile (16) propre à freiner par contact le contrepoids (10) de l'équipage oscillant, la succession rapide de freinages et de déblocages s'effectuant jusqu'à ce que la position de repos soit atteinte.

5. Instrument suivant l'une quelconque des revendications 1 à 4, caractérisé en ce que l'extrémité mobile du dispositif extensible (20) est pourvue d'un prisme (17) disposé en saillie pour intercepter et dévier exactement à 90° le rayon laser (X) émis parallèlement à l'axe du dispositif (20), ce rayon étant projeté par un émetteur (18) convenablement disposé à proximité du dispositif extensible et étant susceptible d'être réglé en position à l'aide d'un système de nivellement de type connu afin que le rayon laser issu de l'émetteur soit exactement orienté à la verticale pour des mesures verticales, à l'horizontale pour des mesures horizontales.

6. Instrument suivant l'une quelconque des revendications 1 à 4, caractérisé en ce que l'extrémité mobile du dispositif extensible (20) est pourvue d'un pentaprisme prévu en saillie afin de dévier exactement à 90° le rayon laser (X) provenant d'un émetteur (18) qui est placé à proximité dudit dispositif (20) et dont l'axe est parallèle à l'axe de celui-ci, quelles que soient les erreurs éventuelles de parallélisme entre ledit rayon (X) et le dispositif extensible (20) et quelles que soient les oscillations structurelles des éléments constitutifs de ce dispositif.

7. Instrument suivant l'une quelconque des revendications 5 et 6, caractérisé en ce que le prisme (17) ou le pentaprisme (23) porté par l'extrémité mobile du dispositif extensible (20) peut être orienté à la main ou à l'aide d'un moteur de façon à ce que le rayon (Y) dévié à 90° individualise le plan horizontal de référence à une hauteur lue sur le dispositif.

8. Instrument suivant l'une quelconque des revendications 5 à 7, caractérisé en ce qu'un pentaprisme (22) est directement prévu à la sortie de l'émetteur (18) de façon à dédoubler à 90° et à 180° le rayon issu dudit émetteur, en engendrant ainsi simultanément deux rayons de visée dont l'un (Z), prévu fixe, est utilisable pour des mesures différentielles.
